# EUROPEAN PATENT SPECIFICATION

(11) **EP 4 117 358 B1**
(45) Date of publication and mention of the grant of the patent: **12.11.2025**
(21) Application number: 22179337.5
(22) Date of filing: 16.06.2022
(51) Int. Cl.: H04W 64/00, H04W 68/00

(54) **ENHANCED POSITIONING IN CELLULAR COMMUNICATION NETWORKS**
VERBESSERTE POSITIONSORTUNG IN ZELLULAREN KOMMUNIKATIONSNETZEN
POSITIONNEMENT AMÉLIORÉ DANS DES RÉSEAUX DE COMMUNICATION CELLULAIRE

(30) Priority: 09.07.2021 US 202163203130 P
(43) Date of publication of application: 11.01.2023
(73) Proprietor: Nokia Technologies Oy, 02610 Espoo (FI)
(72) Inventor: BARBU, Oana-Elena, 9000 Aalborg (DK); VEJLGAARD, Benny, 9260 Gistrup (DK); HARREBEK, Johannes, 9000 Aalborg (DK)
(74) Representative: Nokia EPO representatives

(56) References cited:
- WO-A1-2020/093929
- WO-A1-2021/097855
- US-A1- 2020 229 130
- US-A1- 2021 345 316
- US-A1- 2022 342 028
- ZTE: "Discussion on items led by RAN2 for NR positioning", vol. RAN WG1, no. e-Meeting; 20210510 - 20210527, 12 May 2021 (2021-05-12), XP052010889, Retrieved from the Internet <URL:https://ftp.3gpp.org/tsg_ran/WG1_RL1/TSGR1_105-e/Docs/R1-2104595.zip R1-2104595 Discussion on items led by RAN2 for NR positioning.docx> [retrieved on 20210512]
- CEWIT ET AL: "Discussion on positioning enhancements for Release 17", vol. RAN WG1, no. e-meeting; 20201016 - 20201113, 17 October 2020 (2020-10-17), XP051940317, Retrieved from the Internet <URL:https://ftp.3gpp.org/tsg_ran/WG1_RL1/TSGR1_103-e/Docs/R1-2008718.zip R1-2008718-Positioning enhancements for Release 17_CEWiT.docx> [retrieved on 20201017]
- FISCHER SVEN: "5G and Beyond : Fundamentals and Standards", 26 March 2021 (2021-03-26), Cham, pages 429 - 483, XP055847961, ISBN: 978-3-030-58197-8, Retrieved from the Internet <URL:http://link.springer.com/content/pdf/10.1007/978-3-030-58197-8_15> DOI: 10.1007/978-3-030-58197-8_15
- ERICSSON ET AL: "Discussion on TRP ID issue in measurement messages", vol. RAN WG3, no. Online; 20200601 - 20200611, 21 May 2020 (2020-05-21), XP051887836, Retrieved from the Internet <URL:https://ftp.3gpp.org/tsg_ran/WG3_Iu/TSGR3_108-e/Docs/R3-203735.zip R3-203735 NRPPa TRPid disc.docx> [retrieved on 20200521]
- INTEL CORPORATION: "On TRP selection", vol. RAN WG3, no. Online; 20200420 - 20200430, 9 April 2020 (2020-04-09), XP051870500, Retrieved from the Internet <URL:https://ftp.3gpp.org/tsg_ran/WG3_Iu/TSGR3_107bis_e/Docs/R3-201681.zip R3-201681-TRP-selection-v0.doc> [retrieved on 20200409]

## Description

### FIELD

Various example embodiments relate in general to cellular communication networks and more specifically, to positioning in such networks.

### BACKGROUND

Performance of cellular communication networks may be improved by exploiting known, or predicted, positions of User Equipments, UEs. By tracking positions of UEs, a network can optimize its resource usage for example. In addition, many applications require, and/or benefit from, accurate tracking of positions of the UEs, especially high speed UEs.

Tracking of positions of UEs is thus important in cellular communication networks, such as in networks operating according to Long Term Evolution, LTE, and/or 5G radio access technology. 5G radio access technology may also be referred to as New Radio, NR, access technology. Since its inception, LTE has been widely deployed and 3rd Generation Partnership Project, 3GPP, still develops LTE. Similarly, 3GPP also develops standards for 5G/NR. There is a need to provide improved methods, apparatuses and computer programs for positioning. Such improvements may be exploited in other cellular communication networks as well. Documents US 2020/229130, WO 2021/097855, R1-2104595, R1-2008718, WO 2020/093929, R3-203735, R3-201681, and Chapter 15 of a book titled "5G and Beyond: Fundamentals and Standards" by Sven Fischer discuss aspects of positioning.

### SUMMARY

According to some aspects, there is provided the subject-matter of the independent claims. Some embodiments are defined in the dependent claims.

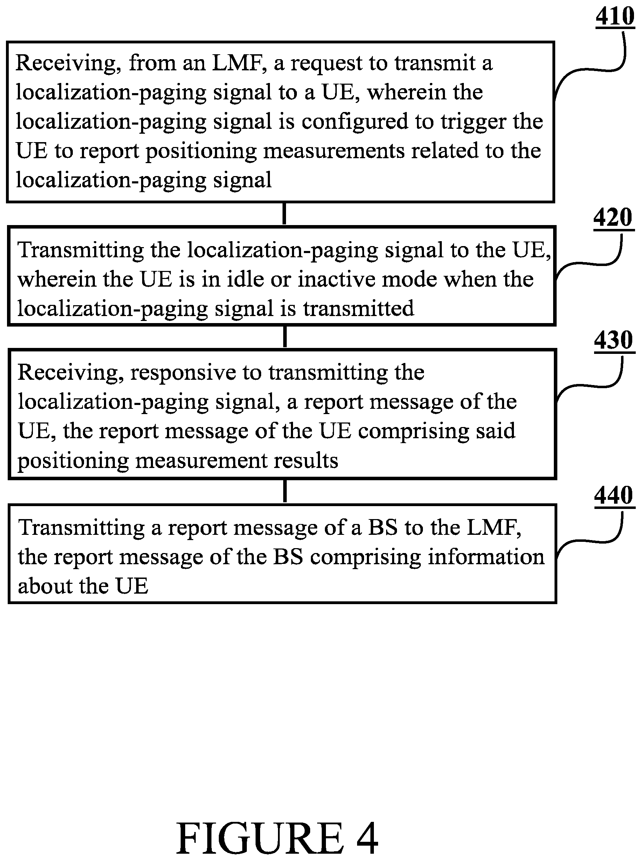

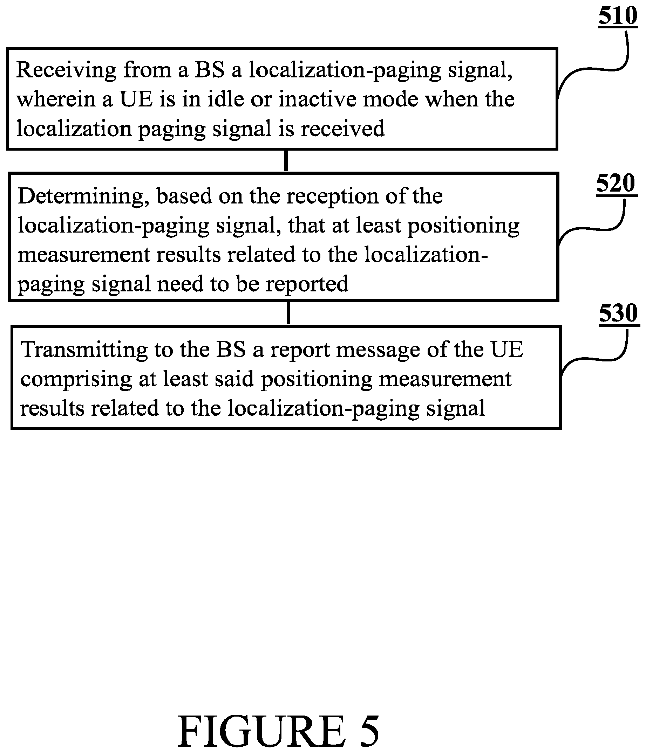

The scope of protection sought for various embodiments of the invention is set out by the independent claims. In the following description only the descriptions of figures 4 and 5 fall under the scope of the independent claims. The rest of the following description and figures (even if named invention or embodiment(s)) does not fall under the scope of the independent claims and is are to be interpreted as examples useful for understanding various embodiments of the invention.

### BRIEF DESCRIPTION OF THE DRAWINGS

FIGURE 1 illustrates a network scenario in accordance with at least some embodiments;
FIGURE 2 illustrates an example apparatus capable of supporting at least some embodiments;
FIGURE 3 illustrates a flow graph of a first method in accordance with at least some embodiments;
FIGURE 4 illustrates a flow graph of a second method in accordance with at least some embodiments;
FIGURE 5 illustrates a flow graph of a third method in accordance with at least some embodiments.

### EMBODIMENTS

Embodiments of the present invention provide improvements for positioning in cellular communication networks. More specifically, embodiments of the present invention make it possible to obtain a more accurate positioning of a User Equipment, UE, when the UE is in idle or inactive mode. Said idle mode and inactive mode may refer to Radio Resource Control, RRC, idle mode and RRC inactive mode, respectively. According to embodiments of the present invention, more accurate positioning can be achieved by improving an estimate of a coarse location of the UE when the UE is in idle or inactive mode, thereby optimizing the resources allocated for obtaining a given positioning accuracy for idle or inactive UE.

The estimate of the coarse location of the idle or inactive mode UE may be improved by exploiting a localization-paging signal. The localization-paging signal may be dedicated for localization purposes. The UE may measure and report positioning measurements related to the localization-paging signal to a Base Station, BS, thereby enabling computation of the coarse location of the UE while the UE is in idle or inactive mode. The positioning measurement results related to the localization-paging signal may comprise for example Time-of-Arrival, ToA, Angle-of-Arrival, AoA, and/or Carrier-to-Interference, CIR, ratio of the localization-paging signal, measured by the UE. The positioning measurement results related to the localization-paging signal may be referred to as positioning Channel State Information, CSI, in general.

The computation of the coarse location of the UE may be performed by the BS or a Location Management Function, LMF. The coarse location of the UE may be then exploited for selecting a list of Transmission and Reception Points, TRPs, for a subsequent positioning of the UE. Said subsequent positioning of the UE may refer to finer localization of the UE compared to a coarse location of the UE, and performed after determining the coarse location of the UE.

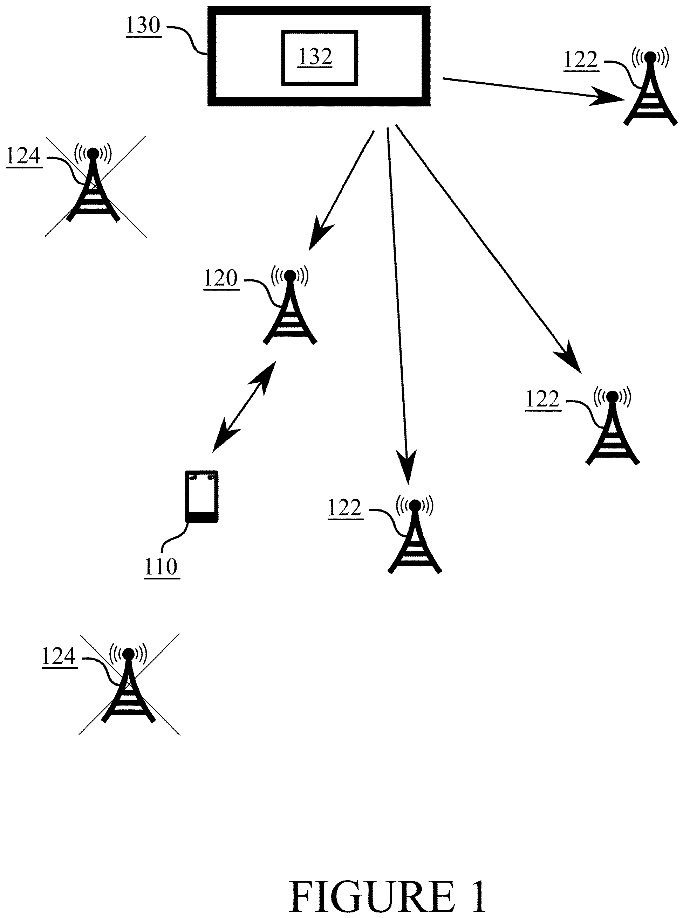

FIGURE 1 illustrates a network scenario in accordance with at least some embodiments. According to the network scenario of FIGURE 1, there may be a cellular communication system, which comprises UE 110, BS 120, and core network element 130. UE 110 may be connected to BS 120 via an air interface. BS 120 may be a network entity that configures some or all control information of UE 110 and allocates resources for UE 110. BS 120 may be considered as a serving BS for UE 110 and the cell of BS 120 may be a serving cell for UE 110. The cellular communication system may also comprise neighboring BSs 122, 124. In some embodiments, a BS may refer to a Transmission and Reception Point, TRP. Alternatively, a BS may comprise or be associated with multiple TRPs that may be co-located or non-co-located. So for example FIGURE 1 may demonstrate a multi-TRP scenario, if BSs are considered as TRPs.

UE 110 may comprise, for example, a smartphone, a cellular phone, a Machine-to-Machine, M2M, node, Machine-Type Communications, MTC, node, an Internet of Things, IoT, node, a car telemetry unit, a laptop computer, a tablet computer or, indeed, any kind of suitable wireless terminal. In the example system of FIGURE 1, UE 110 may communicate wirelessly with a cell of BS 120. Air interface between UE 110 and BS 120 may be configured in accordance with a Radio Access Technology, RAT, which both UE 110 and BS 120 are configured to support.

Examples of cellular RATs include Long Term Evolution, LTE, New Radio, NR, which may also be known as fifth generation, 5G, radio access technology and MulteFire. For example, in the context of LTE, BSs may be referred to as eNBs while in the context of NR, BSs may be referred to as gNB.s In any case, embodiments of the present invention are not restricted to any particular wireless technology. Instead, embodiments may be exploited in any cellular communication system wherein positioning of UE 110 is needed.

BS 120 may be connected, directly or via at least one intermediate node, with core network 130 via a wired interface. Core network 130 may be, in turn, coupled with another network (not shown in FIGURE 1), via which connectivity to further networks may be obtained, for example via a worldwide interconnection network. BS 120 may be connected with at least one other BS as well via an inter-base station interface (not shown in FIGURE 1), even though in some embodiments the inter-base station interface may be absent. BS 120 may be connected, directly or via at least one intermediate node, with core network 130 or with another core network. Core network 130 may comprise LMF or any similar function/apparatus 132. LMF 132 may be configured for example to provide mechanisms for cell and Public Land Mobile Network, PLMN, selection. In some embodiments, LMF 132 may be located somewhere else than in core network 130 though. For instance, LMF 132 may be located in BS 120 or some other BS.

In some example embodiments of the present invention, the network scenario may comprise a relay instead of, or in addition to, UE 110 and/or BS 120. Relaying may be used for example when operating on millimeter-wave frequencies. One example of the relay may be an Integrated Access and Backhaul, IAB, node. The IAB node may be referred to as a selfbackhauling relay as well. Another example of a relay may be an out-band relay. In general, the relay node may comprise two parts:
1) Distributed Unit, DU, part which may facilitate functionalities of BS 120, such as a gNB. Thus, in some example embodiments, the DU part of a relay may perform tasks of BS 120 and BS 120 may refer to the DU part of the relay.
2) Mobile Termination, MT, part which may facilitate functionalities of a UE, i.e., a backhaul link which may be the communication link between a parent node (DU), such as a DU part of BS 120, and the relay, such as an IAB node. In some embodiments, the MT part may be referred to as an IAB-UE as well, i.e., the relay may correspond to UE 110 partly and perform tasks of UE 110. That is, UE 110 may refer to the MT part of the relay.

In general, positioning may be used to improve performance of a communication network. In case of cellular communication networks, positioning information of UEs may be exploited at least to improve network efficiency. By knowing, or predicting, the position of UE 110 for example, the network can optimize its resource usage. For instance, resource allocation may be optimized by predicting future position(s) of UE 110, which allows BSs to adapt for example a modulation and coding scheme, bandwidth and/or numerology to channel and cell load conditions.

Embodiments of the present invention may be exploited at least in cellular communication systems operating according to the 3rd Generation Partnership Project, 3GPP, standards. At least in such cellular communication systems it would be beneficial to specify solutions to enable RAT dependent and RAT independent positioning enhancements for improving positioning accuracy, latency, network and/or device efficiency. Such solutions may be exploited, e.g., for NR, for both Frequency Range, FR, 1 and FR2.

Using NR as an example, it would be beneficial to specify methods, measurements, signaling and procedures to support positioning for UEs in RRC_INACTIVE state, for UE-based and UE-assisted positioning solutions, comprising:
- Downlink, DL, NR positioning methods and RAT-independent positioning methods;
- Support positioning measurements for UEs in RRC_INACTIVE state;
- Reporting of positioning measurement or location estimate performed in RRC_INACTIVE when UE 110 is in RRC_INACTIVE state;
- Uplink, UL, and DL+UL NR positioning methods; and
- Support of gNB positioning measurements for UEs in RRC_INACTIVE state.

To trigger a positioning session, LMF 132 may need to configure a reception/transmission of a positioning signal with a suitable set of TRPs. For instance, 5G NR may need to configure a suitable set of TRPs to trigger an LTE Positioning Protocol, LPP, session. For that, LMF 132 may need to know a coarse location of UE 110 and select the TRPs which are likely to be in the range of UE 110, i.e., likely to hear UE 110 for (UL positioning) or choose the TRPs which UE 110 is likely to hear (for DL positioning). The coarse location of UE 110 may refer to any of the following (or a combination of thereof):
- Serving beam index and/or DL angle of departure;
- ToA with respect to BS 120, i.e., the serving BS;
- A non-unique location of UE 110, e.g., a set of probable locations of UE 110; and
- Proximity to other UEs that have been recently localized;
- UE 110 belonging to one cell sector.

For UEs in RRC connected mode, LMF 132 may have a continuous estimate of the UE coarse location and for example for UE-based positioning and UE-assisted positioning, LMF 132 may efficiently configure only BS 120 and the required/best suited neighbour BSs for Positioning Reference Signal, PRS, transmission in DL positioning or Sounding Reference Signal, SRS, reception in UL. However, in RRC idle or inactive mode, UE 110 may move within a cell and between cells, but LMF 132 may not be updated about location of UE 110.

With reference to FIGURE 1 again, the network scenario illustrated therein shows an example of UE 110 with serving BS 120 and visibility only to some of the neighbour BSs in the area.

That is, when UE 110 is in connected mode, neighboring BSs 122 may be configured for positioning while BSs 124 may not be configured for positioning. So if UE 110 has moved in idle or inactive mode such that neighboring BSs 124 would be in range of UE 110, the configuration made while UE 110 was in connected mode would be suboptimal.

In such case, neighboring BSs 124 within range of UE 110 should be configured for positioning to avoid severe degradation in positioning accuracy. Also, configuring neighboring BSs 122 outside the range of UE 110 would reduce the system capacity due to unnecessary allocation and increase power consumption of UE 110, as UE 110 may attempt to detect signals from BSs 122 in vain. The problem extends further for example in FR2 as the cells and beams get smaller and narrower, respectively, and the coarse location of UE 110 would be essential to configure the appropriate set of neighboring TRPs and their beams.

That is, if LMF 132 does not know a coarse location of UE 110 when UE 110 is in idle or inactive mode, LMF 132 may overprovision a number of TRPs involved in the session and/or beams of the TRPs, e.g., on FR2. In such a case, a large set of resources may be reserved for a positioning session, such as LPP, but not used. Alternatively, LMF 132 may under-dimension the number of TRPs involved in the session and/or beams of the TRPs, e.g., on FR2, which may result in an ambiguous location estimate, e.g. not unique or characterized by high uncertainty.

Therefore, the challenge for LMF 132 is how to select and configure the set of neighbour BSs and TRPs within range of, and distributed around, UE 110 for an idle or inactive mode positioning session. Furthermore, LMF 132 may require a-priori knowledge of neighbour cell beam configurations, e.g., on FR2, which should be enabled when UE 110 is in idle or inactive mode. Embodiments of the present invention therefore provide a solution for determining the set of neighbour BSs and TRPs, and their beams, when UE 110 is in idle or inactive mode.

UE 110 may be positioned using measurements performed by BS 120 when UE 110 is in idle or inactive mode. BS 120 may perform positioning measurements for a signal transmitted by UE 110, such as a Physical Random Access Channel, PRACH, signal. In addition, a set of TRPs may be instructed by LMF 132 to perform positioning measurements for the signal transmitted by UE 110. For instance, LMF 132 may choose a set of TRPs which are likely to hear UE 110 for reporting and request such TRPs to measure specific positioning CSI, e.g. TOA, UL AOA, CIR, etc.

To choose the set of TRPs, LMF 132 may need to first compute the coarse location of UE 110 when UE 110 is in idle or inactive mode. Embodiments of the present invention make it possible for LMF 132 to select the set of TRPs, which are likely to hear UE 110 for reporting, for a positioning process when UE 110 is in idle or inactive mode. LMF 132 may select the set of TRPs for the positioning process based on information about UE 110, such as a coarse location of UE 110 computed by BS 120 or positioning measurement results reported by UE 110. If said positioning measurement results reported by UE 110 are transmitted to LMF 132, LMF 132 may compute the coarse location of UE 110 for the positioning process. In any case, the set of TRPs may be selected for the positioning process based on the coarse location of UE 110.

In some embodiments, the following steps may be performed. BS 120 may first transmit a localization-paging signal when UE 110 is in idle or inactive mode. The localization-paging message may be referred to as an LPP-paging signal as well. The localization-paging signal may be dedicated for localization purposes, but not for any other purpose, and a configuration of the localization-paging signal may be different compared to other paging signals. For instance, resource allocation and payload of the localization-paging message may be different compared to other paging signals. UE 110 may perform positioning measurement related to the localization-paging signal and potentially other reference signals, when UE 110 is in idle or inactive mode. The localization-paging signal may be configured to trigger UE 110 to report positioning measurement results related to the localization-paging signal. UE 110 may thus determine, based on the reception of the localization-paging signal, that at least positioning measurement results related to the localization-paging signal need to be reported. For instance, UE 110 may measure ToA, AoA and/or CIR of the localization-paging signal.

UE 110 may then transmit a report message of UE 110, for example via an UL Small Data Transmission, SDT. The report message of UE 110 may comprise said positioning measurement results related to the localization-paging signal. In some embodiments, LMF 132 may configure BS 120, i.e., the serving BS, to perform positioning measurements related to the report message of UE 110. Thus, BS 120 may measure the ToA, AoA and/or CIR of a signal carrying the report message of UE 110. For instance, LMF 132 may configure BS 120 to measure and report positioning measurement results based on UL SDT Demodulation Reference Signal, DMRS, reception. Said positioning measurement results may then be used by BS 120 or LMF 132 to compute the coarse location of UE 110 such that the set of TRPs, which are likely to hear UE 110 for positioning reporting, can be selected for a positioning process based on the computed coarse location estimate.

Embodiments of the present invention therefore provide an enhanced positioning framework, such as an LPP framework, through which LMF 132 may acquire information about the coarse location of UE 110 when said UE is in idle or inactive mode. The coarse location of UE 110 may be a prerequisite for triggering a subsequent positioning session, such as a 5G NR LPP positioning session, and the coarse location of UE 110 may used by LMF 132 to select the set of TRPs for the subsequent positioning session. That is, the coarse location of UE 110 may be needed to trigger the subsequent positioning session such that LMF 132 may select the set of TRPs properly, wherein the subsequent positioning session may refer to a positioning session which may be performed after the coarse location of UE 110 has been determined, either by LMF 132 or BS 120.

More specifically, the positioning session, such as an LPP session, for idle or inactive mode UE 110 may comprise calculating a position of UE 110 via measurements of an UL signal, such as a PRACH signal, transmitted by UE 110. Before the positioning session, UE 110 may need to be localized coarsely. For computing coarse location of UE 110, UE 110 may be first paged with a localization-paging message. The localization-paging message may be designed specifically for localization purposes to distinguish the localization via PRACH from standard PRACH. Following the reception of the localization-paging signal, UE 110 may transmit a signal carrying the report message of UE 110, for example on UL SDT. After that, the coarse location of UE 110 may be computed and a set of TRPs may be selected and instructed by LMF 132 to detect another signal transmitted by UE 110 and measure said another signal, e.g., for UL TOA. The measurement results related to said another signal may be reported to LMF 132 and used by LMF 132 to compute a position of UE 110 more accurately than in case of the coarse location.

LMF 132 may trigger localization-paging of UE 110 for the positioning process when UE 110 is in idle or inactive mode. The localization-paging may be referred to as LPP-paging as well. LMF 132 may transmit a request to BS 120, to request BS 120 to transmit a localization-paging message when UE 110 is in idle or inactive mode. Upon receiving the request, BS 120 may transmit the localization-paging message to UE 110. The localization-paging message may have a different configuration than other paging messages, like standard paging messages, e.g., 5G NR paging message. For instance, a paging frame and/or paging offset of the localization-paging signal may be different compared to a standard paging message so that UE 110 distinguishes the localization-paging message from the standard paging message and hence knows the functions it needs to perform upon receiving the localization-paging message. For example, an LPP-specific paging frame and paging offset may be defined. In some embodiments, UE 110 may use the same receive beam as it would use for standard paging.

In some embodiments, UE 110 may be configured a-priori, i.e., before receiving the localization-paging signal, by LMF 132 to measure and report positioning measurement results related to the localization-paging signal, such as TOA, AoA and/or CIR of the localization-paging signal. UE 110 may be configured to perform said positioning measurements whenever a localization signal is detected and received by UE. LMF 132 may transmit a request to BS 120, to request BS 120 to configure UE 110 to report said positioning measurement whenever a localization-paging signal is received by UE 110. Upon receiving the request, BS 120 may transmit a configuration to UE 110, the configuration configuring UE 110 to report said positioning measurement results whenever a localization-paging signal is received. Upon receiving the configuration, UE 110 may transmit to BS 120 the report message of UE 110 comprising said positioning measurement results. Thus, said positioning measurement results may be taken into account by BS 120, or LMF 132 if forwarded to LMF 132 by BS 120, when the coarse location of UE 110 is computed, to enhance the estimation of the coarse location.

In some embodiments, UE 110 may be configured by LMF 132 to measure and report received signal power levels of Synchronization Signal Blocks, SSBs, transmitted by neighbour cells of BS 120 to further enhance the estimation of the coarse location of UE 110. LMF 132 may transmit a request to BS 120, to request BS 120 to configure UE 110 to measure and report received signal power levels of SSBs of neighboring cells of BS 120. Upon receiving the request, BS 120 may transmit a configuration to UE 110, the configuration configuring the user equipment to measure the received signal power levels of SSBs of neighboring cells of BS 120. Upon receiving the configuration, UE 110 may transmit to BS 120 the received signal power levels of SSBs of neighboring cells of BS 120. Thus, the received signal power levels of SSBs of neighboring cells of BS 120 may be taken into account by BS 120, or LMF 132 if forwarded to LMF 132 by BS 120, when the coarse location of UE 110 is computed, to enhance the estimation of the course location.

In general a TRP may be a BS, such as a gNB, another UE, a relay, one RRH of a BS, etc. TRPs may transmit PRSs while SSBs may be sent by BSs. UE 110 may measure RSRP of the SSBs, and serving BS 120 or LMF 132 may determine the coarse location of UE 110 using these measurements. Then, LMF 132 may use the coarse location to select the best TRPs. For example, LMF 132 may select as TRPs some of the neighbor cells for which UE 110 has measured the SSBs, i.e., TRPs near UE 110, etc.

In some embodiments, , UE 110 may be configured by LMF 132 to measure and report at least one other DL reference signal than the localization-paging message, such as positioning CSI of the at least one other DL reference signal. For instance, the localization-paging message may comprise an explicit request for UE 110 to measure at least one other DL reference signals, like PSS/SSS. LMF 132 may transmit a request to BS 120, to request BS 120 to configure UE 110 to report at least one measurement of the at least one other DL reference signal than the localization-paging signal. Upon receiving the request, BS 120 may transmit a configuration to UE 110, the configuration configuring UE 110 to report at least one measurement of the at least one other DL reference signal. Upon receiving the configuration, UE 110 may transmit to BS 120 the report message of UE 110 comprising the at least one measurement result of the at least one other DL reference signal. Thus, the at least one other DL reference signal may be taken into account by BS 120, or LMF 132 if forwarded to LMF 132 by BS 120, when the course location of UE 110 is computed, to enhance the estimation of the coarse location.

In some embodiments, UE 110 may be configured to report measurement results using an UL SDT. That is, UL SDT may be used for localization of idle or inactive UEs. UE 110 may use the configured UL SDT to send the measurement results using the same beam that was used for reception of the localization-paging message.

In some embodiments, BS 120 may be requested by LMF 132 to perform positioning measurements related to a signal carrying a report message of UE 110. For instance, LMF 132 may request BS 120 to perform positioning measurements on the UL SDT DMRS. BS 120 may receive from LMF 132 a request to perform positioning measurements related to the signal carrying the report message of UE 110. BS 120 may then perform said positioning measurements related to the signal carrying the report message of UE 110. Thus, said positioning measurements related to the signal carrying the report message of UE 110 may be taken into account by BS 120, or LMF 132 if forwarded to LMF 132 by BS 120, when the coarse location of UE 110 is computed, to enhance the estimation of the coarse location.

UE 110 may, when it detects that the localization-paging signal is targeted to it, proceed with the positioning measurements as instructed and configured. In other words, UE 110 may determine, based on the reception of the localization-paging signal, that at least positioning measurement results related to the localization-paging signal need to be reported.

In some embodiments, the localization-paging signal may be repeated for all transmit beams and thus, measuring and reporting of multiple beams may also be configured by LMF 132. In some embodiments, UE 110 may be configured by LMF 132 to measure and report multiple beams. LMF 132 may transmit a request to BS 120, to request BS 120 to configure UE 110 to report positioning measurement results related to multiple beams. Upon receiving the request, BS 120 may transmit a configuration to UE 110, the configuration configuring the user equipment 110 to report said positioning measurement results related to said multiple beams. Upon receiving the configuration, UE 110 may transmit to BS 120 said positioning measurement results related to said multiple beams. Thus, said positioning measurement results related to said multiple beams may be taken into account by BS 120, or LMF 132 if forwarded to LMF 132 by BS 120, when the coarse location of UE 110 is computed, to enhance the estimation of the course location.

In some embodiments, UE 110 may provide an estimated shape of a beam and orientation of the beam relative to BS 120 to enable LMF 132 to further down-select the list of TRPs and beams. UE 110 may choose an anchor BS, and report measurements relative to the anchor BS. UE 110 may for example do that after measuring the RSRP of all detected BSs. In this case, the last serving BS, such as BS 120, may be selected as an anchor. Alternatively, or in addition, BS 120 may provide an estimated shape of a beam and orientation of the beam relative to UE 110 to enable LMF 132 to further down-select the list of TRPs and beams.

BS 120 may transmit information about UE 110 to LMF 132. Depending on the configuration, i.e., whether BS 120 or LMF 132 computes the coarse location of UE 110, BS 120 may transmit positioning measurement results of UE 110 to LMF 132. In some embodiments, BS 120 may transmit said information about UE 110 to LMF 132, such as the coarse location of UE 110 or said positioning measurement results of UE 110 related to the localization-paging signal, and/or positioning measurements results of BS 120 to LMF 132 via NRPPa interface.

In some embodiments, LMF 132 may compute a coarse location of UE 110 based on said positioning measurement results of UE 110 related to the localization-paging signal, and possibly said positioning measurements related to the signal carrying the report message of UE 110, and select the list of TRP based on the coarse location of UE 110.

Alternatively, BS 120 may determine the coarse location of UE 110 based on said positioning measurement results of UE 110 related to the localization-paging signal and transmit the coarse location of UE 110 to LMF 132 as said information about UE 110. LMF 132 may select the list of TRPs list for the following positioning session, such as LPP, based on the coarse location, e.g., based on PRACH measurements. In some embodiments, PRACH-based positioning follows next. For example, the actual PRS based positioning process may be triggered by transmission of PRSs from the set of TRPs.

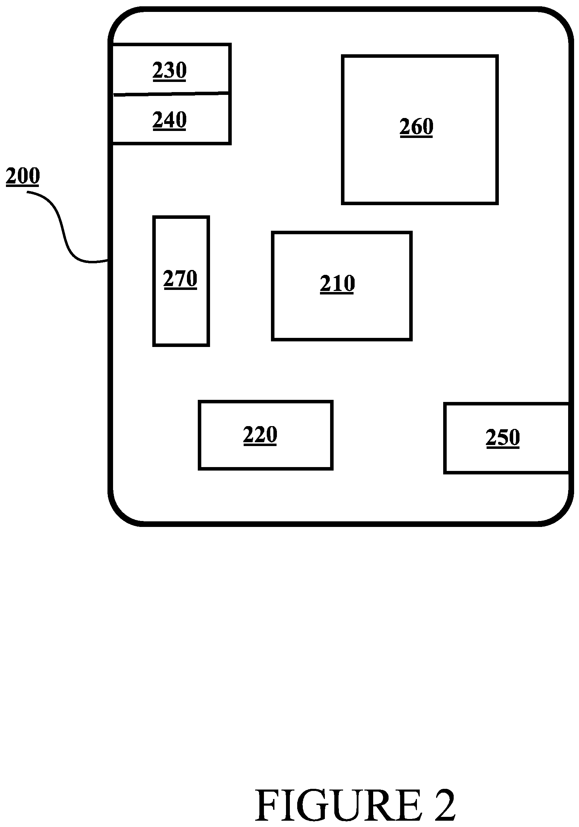

FIGURE 2 illustrates an example apparatus capable of supporting at least some embodiments. Illustrated is device 200, which may comprise, for example, UE 110, BS 120, or LMF 132. Comprised in device 200 is processor 210, which may comprise, for example, a single- or multi-core processor wherein a single-core processor comprises one processing core and a multi-core processor comprises more than one processing core. Processor 210 may comprise, in general, a control device. Processor 210 may comprise more than one processor. Processor 210 may be a control device. A processing core may comprise, for example, a Cortex-A8 processing core manufactured by ARM Holdings or a Steamroller processing core produced by Advanced Micro Devices Corporation. Processor 210 may comprise at least one Qualcomm Snapdragon and/or Intel Atom processor. Processor 210 may comprise at least one applicationspecific integrated circuit, ASIC. Processor 210 may comprise at least one field-programmable gate array, FPGA. Processor 210 may be means for performing method steps in device 200. Processor 210 may be configured, at least in part by computer instructions, to perform actions.

A processor may comprise circuitry, or be constituted as circuitry or circuitries, the circuitry or circuitries being configured to perform phases of methods in accordance with embodiments described herein. As used in this application, the term "circuitry" may refer to one or more or all of the following: (a) hardware-only circuit implementations, such as implementations in only analog and/or digital circuitry, and (b) combinations of hardware circuits and software, such as, as applicable: (i) a combination of analog and/or digital hardware circuit(s) with software/firmware and (ii) any portions of hardware processor(s) with software (including digital signal processor(s)), software, and memory(ies) that work together to cause an apparatus, such as a mobile phone or server, to perform various functions) and (c) hardware circuit(s) and or processor(s), such as a microprocessor(s) or a portion of a microprocessor(s), that requires software (e.g., firmware) for operation, but the software may not be present when it is not needed for operation.

This definition of circuitry applies to all uses of this term in this application, including in any claims. As a further example, as used in this application, the term circuitry also covers an implementation of merely a hardware circuit or processor (or multiple processors) or portion of a hardware circuit or processor and its (or their) accompanying software and/or firmware. The term circuitry also covers, for example and if applicable to the particular claim element, a baseband integrated circuit or processor integrated circuit for a mobile device or a similar integrated circuit in server, a cellular network device, or other computing or network device.

Device 200 may comprise memory 220. Memory 220 may comprise random-access memory and/or permanent memory. Memory 220 may comprise at least one RAM chip. Memory 220 may comprise solid-state, magnetic, optical and/or holographic memory, for example. Memory 220 may be at least in part accessible to processor 210. Memory 220 may be at least in part comprised in processor 210. Memory 220 may be means for storing information. Memory 220 may comprise computer instructions that processor 210 is configured to execute. When computer instructions configured to cause processor 210 to perform certain actions are stored in memory 220, and device 200 overall is configured to run under the direction of processor 210 using computer instructions from memory 220, processor 210 and/or its at least one processing core may be considered to be configured to perform said certain actions. Memory 220 may be at least in part comprised in processor 210. Memory 220 may be at least in part external to device 200 but accessible to device 200.

Device 200 may comprise a transmitter 230. Device 200 may comprise a receiver 240. Transmitter 230 and receiver 240 may be configured to transmit and receive, respectively, information in accordance with at least one cellular or non-cellular standard. Transmitter 230 may comprise more than one transmitter. Receiver 240 may comprise more than one receiver. Transmitter 230 and/or receiver 240 may be configured to operate in accordance with Global System for Mobile communication, GSM, Wideband Code Division Multiple Access, WCDMA, Long Term Evolution, LTE, and/or 5G/NR standards, for example.

Device 200 may comprise a Near-Field Communication, NFC, transceiver 250. NFC transceiver 250 may support at least one NFC technology, such as Bluetooth, Wibree or similar technologies.

Device 200 may comprise User Interface, UI, 260. UI 260 may comprise at least one of a display, a keyboard, a touchscreen, a vibrator arranged to signal to a user by causing device 200 to vibrate, a speaker and a microphone. A user may be able to operate device 200 via UI 260, for example to accept incoming telephone calls, to originate telephone calls or video calls, to browse the Internet, to manage digital files stored in memory 220 or on a cloud accessible via transmitter 230 and receiver 240, or via NFC transceiver 250, and/or to play games.

Device 200 may comprise or be arranged to accept a user identity module 270. User identity module 270 may comprise, for example, a Subscriber Identity Module, SIM, card installable in device 200. A user identity module 270 may comprise information identifying a subscription of a user of device 200. A user identity module 270 may comprise cryptographic information usable to verify the identity of a user of device 200 and/or to facilitate encryption of communicated information and billing of the user of device 200 for communication effected via device 200.

Processor 210 may be furnished with a transmitter arranged to output information from processor 210, via electrical leads internal to device 200, to other devices comprised in device 200. Such a transmitter may comprise a serial bus transmitter arranged to, for example, output information via at least one electrical lead to memory 220 for storage therein. Alternatively to a serial bus, the transmitter may comprise a parallel bus transmitter. Likewise processor 210 may comprise a receiver arranged to receive information in processor 210, via electrical leads internal to device 200, from other devices comprised in device 200. Such a receiver may comprise a serial bus receiver arranged to, for example, receive information via at least one electrical lead from receiver 240 for processing in processor 210. Alternatively to a serial bus, the receiver may comprise a parallel bus receiver.

Device 200 may comprise further devices not illustrated in FIGURE 2. For example, where device 200 comprises a smartphone, it may comprise at least one digital camera. Some devices 200 may comprise a back-facing camera and a front-facing camera, wherein the back-facing camera may be intended for digital photography and the front-facing camera for video telephony. Device 200 may comprise a fingerprint sensor arranged to authenticate, at least in part, a user of device 200. In some embodiments, device 200 lacks at least one device described above. For example, some devices 200 may lack a NFC transceiver 250 and/or user identity module 270.

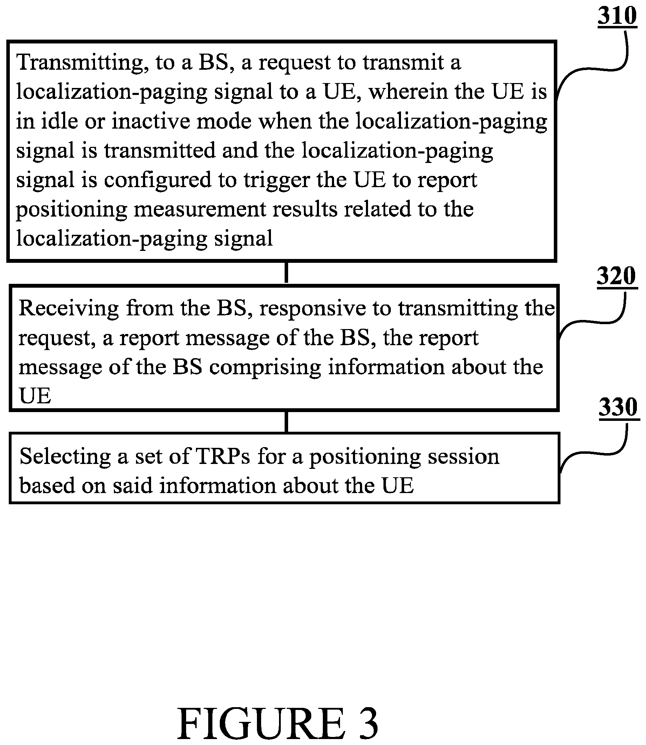

Processor 210, memory 220, transmitter 230, receiver 240, NFC transceiver 250, UI 260 and/or user identity module 270 may be interconnected by electrical leads internal to device 200 in a multitude of different ways. For example, each of the aforementioned devices may be separately connected to a master bus internal to device 200, to allow for the devices to exchange information. However, as the skilled person will appreciate, this is only one example and depending on the embodiment various ways of interconnecting at least two of the aforementioned devices may be selected without departing from the scope of the embodiments. FIGURE 3 is a flow graph of a first method in accordance with at least some embodiments. The phases of the illustrated first method may be performed by LMF 132 or by a control device configured to control the functioning thereof, possibly when installed therein.

The first method may comprise, at step 310, transmitting, to a base station, a request to transmit a localization-paging signal to a user equipment, wherein the user equipment is in idle or inactive mode when the localization-paging signal is transmitted and the localization-paging signal is configured to trigger the user equipment to report positioning measurement results related to the localization-paging signal. The first method may also comprise, at step 320, receiving from the base station, responsive to transmitting the request, a report message of the base station, the report message of the base station comprising information about the user equipment. Finally, the first method may comprise, at step 330, selecting a set of transmission and reception points for a positioning session based on said information about the user equipment.

FIGURE 4 is a flow graph of a second method in accordance with at least some embodiments.

The phases of the illustrated second method are performed by BS 120 or not according to the claims, by a DU part of a relay, or by a control device configured to control the functioning thereof, possibly when installed therein.

The second method comprises, at step 410, receiving, from a location management function, a request to transmit a localization-paging signal to a user equipment, wherein the localization-paging signal is configured to trigger the user equipment to report positioning measurement results of the localization-paging signal. The second method comprises, at step 420, transmitting the localization-paging signal to the user equipment, wherein the user equipment is in idle or inactive mode when the localization-paging signal is transmitted. In addition, the second method may comprise, at step 430, receiving, responsive to transmitting the localization-paging signal, a report message of the user equipment, the report message of the user equipment comprising said positioning measurement results.

The second method further comprises receiving from the location management function a request to perform positioning measurements on a signal carrying the report message of the user equipment and performing said positioning measurements on the signal carrying the report message of the user equipment.

Finally, the second method may comprise, at step 440, transmitting a report message of the base station to the location management function, the report message of the base station comprising information about the location of the user equipment, the information comprising at least one of the following: the location of the user equipment, the report message of the user equipment, or said positioning measurements performed on the signal carrying the report message of the user equipment.

FIGURE 5 is a flow graph of a third method in accordance with at least some embodiments.

The phases of the illustrated first method are performed by UE 110 or not according to the claims, by a MT part of a relay, or by a control device configured to control the functioning thereof, possibly when installed therein.

The third method comprises, at step 510, receiving from a base station a localization-paging signal, wherein the user equipment is in idle or inactive mode when the localization-paging signal is received. The third method also comprises, at step 520, determining, based on the reception of the localization-paging signal, that at least positioning measurement results of the localization-paging signal need to be reported. The third methods further comprises measuring the localization-paging signal to obtain said positioning measurement results. Finally, the third method comprises, at step 530, transmitting to the base station a report message of the user equipment comprising at least said positioning measurement results of the localization-paging signal.

It is to be understood that the embodiments disclosed are not limited to the particular structures, process steps, or materials disclosed herein, but are extended to equivalents thereof as would be recognized by those ordinarily skilled in the relevant arts. It should also be understood that terminology employed herein is used for the purpose of describing particular embodiments only and is not intended to be limiting.

Reference throughout this specification to one embodiment or an embodiment means that a particular feature, structure, or characteristic described in connection with the embodiment is included in at least one embodiment. Thus, appearances of the phrases "in one embodiment" or "in an embodiment" in various places throughout this specification are not necessarily all referring to the same embodiment. Where reference is made to a numerical value using a term such as, for example, about or substantially, the exact numerical value is also disclosed.

As used herein, a plurality of items, structural elements, compositional elements, and/or materials may be presented in a common list for convenience. However, these lists should be construed as though each member of the list is individually identified as a separate and unique member. Thus, no individual member of such list should be construed as a de facto equivalent of any other member of the same list solely based on their presentation in a common group without indications to the contrary. In addition, various embodiments and examples may be referred to herein along with alternatives for the various components thereof. It is understood that such embodiments, examples, and alternatives are not to be construed as de facto equivalents of one another, but are to be considered as separate and autonomous representations.

In an exemplary embodiment, an apparatus, such as, for example, UE 110, BS 120, or LMF 132 may comprise means for carrying out the embodiments described above and any combination thereof.

In an exemplary embodiment, a computer program may be configured to cause a method in accordance with the embodiments described above and any combination thereof. In an exemplary embodiment, a computer program product, embodied on a non-transitory computer readable medium, may be configured to control a processor to perform a process comprising the embodiments described above and any combination thereof.

In an exemplary embodiment, an apparatus, such as, for example, UE 110, BS 120, or LMF 132 may comprise at least one processor, and at least one memory including computer program code, wherein the at least one memory and the computer program code are configured to, with the at least one processor, cause the apparatus at least to perform the embodiments described above and any combination thereof.

Furthermore, the described features, structures, or characteristics may be combined in any suitable manner in one or more embodiments. In the preceding description, numerous specific details are provided, such as examples of lengths, widths, shapes, etc., to provide a thorough understanding of embodiments of the invention. One skilled in the relevant art will recognize, however, that the invention can be practiced without one or more of the specific details, or with other methods, components, materials, etc. In other instances, well-known structures, materials, or operations are not shown or described in detail to avoid obscuring aspects of the invention.

While the forgoing examples are illustrative of the principles of the embodiments in one or more particular applications, it will be apparent to those of ordinary skill in the art that numerous modifications in form, usage and details of implementation can be made without the exercise of inventive faculty, and without departing from the principles and concepts of the invention. Accordingly, it is not intended that the invention be limited, except as by the claims set forth below.

The verbs "to comprise" and "to include" are used in this document as open limitations that neither exclude nor require the existence of also un-recited features.

Furthermore, it is to be understood that the use of "a" or "an", that is, a singular form, throughout this document does not exclude a plurality.

### INDUSTRIAL APPLICABILITY

At least some embodiments find industrial application in cellular communication networks, for example in 3GPP networks, wherein positioning is used.

### ACRONYMS LIST

- 3GPP: 3rd Generation Partnership Project
- AoA: Angle-of-Arrival
- BS: Base Station
- CIR: Carrier-to-Interference
- CSI: Channel State Information
- DL: Downlink
- DMRS: Demodulation Reference Signal
- DU: Distributed Unit
- GSM: Global System for Mobile communication
- IAB: Integrated Access and Backhaul
- IoT: Internet of Things
- LMF: Location Management Function
- LPP: LTE Positioning Protocol
- LTE: Long-Term Evolution
- M2M: Machine-to-Machine
- MAC: Media Access Control
- MT: Mobile Termination
- NFC: Near-Field Communication
- NR: New Radio
- PLMN: Public Land Mobile Network
- PRACH: Physical Random Access Channel
- PRS: Positioning Reference Signal
- PSS: Primary Synchronization Signal
- RAN: Radio Access Network
- RAT: Radio Access Technology
- RRC: Radio Resource Control
- SDT: Small Data Transmission
- SRS: Sounding Reference Signal
- SSB: Synchronization Signal Block
- SSS: Secondary Synchronization Signal
- TDOA: Time Difference of Arrival
- ToA: Time-of-Arrival
- TRP: Transmission and Reception Point
- UE: User Equipment
- UI: User Interface
- UL: Uplink
- WCDMA: Wideband Code Division Multiple Access

### REFERENCE SIGNS LIST

| | |
|---|---|
| 110 | UE |
| 120 | Serving BS |
| 122, 124 | Neighboring BSs |
| 130 | Core Network |
| 132 | LMF |
| 200 - 270 | Structure of the apparatus of FIGURE 2 |
| 310 - 330 | Phases of the first method of FIGURE 3 |
| 410 - 440 | Phases of the second method of FIGURE 4 |
| 510-530 | Phases of the third method of FIGURE 5 |

## Claims

1. A base station (120) comprising:
- means for receiving (410), from a location management function (132), a request to transmit a localization-paging signal to a user equipment (110), wherein the localization-paging signal is configured to trigger the user equipment (110) to report positioning measurement results of the localization-paging signal;
- means for transmitting (420) the localization-paging signal to the user equipment (110), wherein the user equipment (110) is in idle or inactive mode when the localization-paging signal is transmitted;
- means for receiving (430), responsive to transmitting the localization-paging signal, a report message of the user equipment (110), the report message of the user equipment comprising said positioning measurement results;
- means for receiving from the location management function (132) a request to perform positioning measurements on a signal carrying the report message of the user equipment; and
- means for performing said positioning measurements on the signal carrying the report message of the user equipment; and
- means for transmitting (440) a report message of the base station to the location management function (132), the report message of the base station comprising information about location of the user equipment (110), the information comprising at least one of the following: the location of the user equipment (110), the report message of the user equipment, or said positioning measurements performed on the signal carrying the report message of the user equipment.

2. The base station (120) according to claim 1, wherein the base station (120) further comprises:
- means for receiving from the location management function (132) a request to configure the user equipment (110) to report positioning measurement results whenever the localization-paging signal is received; and
- means for transmitting to the user equipment (110) a configuration configuring the user equipment (110) to report positioning measurement results whenever the localization-paging signal is received.

3. The base station (120) according to any of claims 1 to 2, wherein the base station (120) further comprises:
- means for receiving from the location management function (132) a request to configure the user equipment (110) to report received signal power levels of synchronization signal blocks of neighboring cells of base station (120); and
- means for transmitting to the user equipment (110) a configuration configuring the user equipment (110) to report received signal power levels of synchronization signal blocks of neighboring cells of the base station (120).

4. The base station (120) according to any of claims 1 to 3, wherein the base station (120) further comprises:
- means for receiving from the location management function (132) a request to configure the user equipment (110) to report at least one measurement of at least one other downlink reference signal than the localization-paging signal;
- means for transmitting to the user equipment (110) a configuration configuring the user equipment (110) to report the at least one measurement of at least one other downlink reference signal.

5. The base station (120) according to any of claims 1 to 4, wherein the base station (120) further comprises:
- means for receiving from the location management function (132) a request to configure the user equipment (110) to report positioning measurement results of multiple beams; and
- means for transmitting to the user equipment (110) a configuration configuring the user equipment (110) to report said positioning measurement results of multiple beams.

6. A user equipment (110) comprising:
- means for receiving (510) from a base station (120) a localization-paging signal, wherein the user equipment (110) is in idle or inactive mode when the localization-paging signal is received;
- means for determining (520), based on the reception of the localization-paging signal, that at least positioning measurement results of the localization-paging signal need to be reported;
- means for measuring the localization-paging signal to obtain said positioning measurement results; and
- means for transmitting (530) to the base station (120) a report message of the user equipment comprising at least said positioning measurement results of the localization-paging signal.

7. The user equipment (110) according to claim 6, wherein the user equipment (110) further comprises:
- means for receiving from the base station (120) a configuration configuring the user equipment (110) to report received signal power levels of synchronization signal blocks of neighboring cells of the base station (120);
- means for transmitting to the base station (120) the received signal power levels of synchronization signal blocks of neighboring cells of the base station (120).

8. The user equipment according to any of claims 6 to 7, wherein the user equipment further comprises:
- means for receiving from the base station a configuration configuring the user equipment to report at least one measurement of at least one other downlink reference signal than the localization-paging signal;
- means for transmitting to the base station the at least one measurement result of the at least one other downlink reference signal.

9. The user equipment (110) according to any of claims 6 to 8, wherein the user equipment (110) further comprises:
- means for receiving from the base station (120) a configuration configuring the user equipment (110) to report positioning measurement results of multiple beams;
- means for transmitting to the base station (120) said positioning measurement results of said multiple beams.

10. The user equipment (110) according to any of claims 6 to 9, wherein said positioning measurement results of the localization-paging signal comprise at least one of a time-of-arrival, an angle-of-arrival or a carrier-to-interference ratio of the localization-paging signal, measured by the user equipment (110).

11. A method performed by a base station (120), the method comprising:
- receiving (410), from a location management function (132), a request to transmit a localization-paging signal to a user equipment (110), wherein the localization-paging signal is configured to trigger the user equipment (110) to report positioning measurement results of the localization-paging signal;
- transmitting (420) the localization-paging signal to the user equipment (110), wherein the user equipment (110) is in idle or inactive mode when the localization-paging signal is transmitted;
- receiving (430), responsive to transmitting the localization-paging signal, a report message of the user equipment (110), the report message of the user equipment comprising said positioning measurement results;
- receiving from the location management function (132) a request to perform positioning measurements on a signal carrying the report message of the user equipment; and
- performing said positioning measurements on the signal carrying the report message of the user equipment; and
- transmitting (440) a report message of the base station to the location management function (132), the report message of the base station comprising information about location of the user equipment (110), the information comprising at least one of the following: the location of the user equipment (110), the report message of the user equipment, or said positioning measurements performed on the signal carrying the report message of the user equipment).

12. A method performed by a user equipment (110), the method comprising:
- receiving (510) from a base station (120) a localization-paging signal, wherein the user equipment (110) is in idle or inactive mode when the localization-paging signal is received;
- determining (520), based on the reception of the localization-paging signal, that at least positioning measurement results of the localization-paging signal need to be reported;
- measuring the localization-paging signal to obtain said positioning measurement results; and
- transmitting (530) to the base station (120) a report message of the user equipment comprising at least said positioning measurement results of the localization-paging signal.

## Patentansprüche

1. Basisstation (120), die Folgendes umfasst:
- Mittel zum Empfangen (410) einer Anforderung zum Übertragen eines Lokalisierungspagingsignals zu einer Teilnehmereinrichtung (110) von einer Standortverwaltungsfunktion (132), wobei das Lokalisierungspagingsignal dazu ausgelegt ist auszulösen, dass die Teilnehmereinrichtung (110) Positionsbestimmungsmessergebnisse des Lokalisierungspagingsignals meldet;
- Mittel zum Übertragen (420) des Lokalisierungspagingsignals zur Teilnehmereinrichtung (110), wobei sich die Teilnehmereinrichtung (110) in einem Ruhe- oder Inaktivitätsmodus befindet, wenn das Lokalisierungspagingsignal übertragen wird;
- Mittel zum Empfangen (430) einer Berichtsnachricht der Teilnehmereinrichtung (110) in Reaktion auf das Übertragen des Lokalisierungspagingsignals, wobei die Berichtsnachricht der Teilnehmereinrichtung die Positionsbestimmungsmessergebnisse umfasst;
- Mittel zum Empfangen einer Anforderung zum Durchführen von Positionsbestimmungsmessungen an einem Signal, dass die Berichtsnachricht der Teilnehmereinrichtung enthält, von der Standortverwaltungsfunktion (132); und
- Mittel zum Durchführen der Positionsbestimmungsmessungen an dem Signal, das die Berichtsnachricht der Teilnehmereinrichtung enthält; und
- Mittel zum Übertragen (440) einer Berichtsnachricht der Basisstation zur Standortverwaltungsfunktion (132), wobei die Berichtsnachricht der Basisstation Informationen über einen Standort der Teilnehmereinrichtung (110) umfasst, wobei die Informationen mindestens eines von Folgendem umfassen: dem Standort der Teilnehmereinrichtung (110), der Berichtsnachricht der Teilnehmereinrichtung oder den Positionsbestimmungsmessungen, die am Signal durchgeführt werden, das die Berichtsnachricht der Teilnehmereinrichtung enthält.

2. Basisstation (120) nach Anspruch 1, wobei die Basisstation (120) ferner Folgendes umfasst:
- Mittel zum Empfangen einer Anforderung zum Auslegen der Teilnehmereinrichtung (110) zum Melden von Positionsbestimmungsmessergebnissen immer dann, wenn das Lokalisierungspagingsignal empfangen wird, von der Standortverwaltungsfunktion (132); und
- Mittel zum Übertragen einer Auslegung, die die Teilnehmereinrichtung (110) zum Melden von Positionsbestimmungsmessergebnissen auslegt immer dann, wenn das Lokalisierungspagingsignal empfangen wird, zur Teilnehmereinrichtung (110).

3. Basisstation (120) nach einem der Ansprüche 1 bis 2, wobei die Basisstation (120) ferner Folgendes umfasst:
- Mittel zum Empfangen einer Anforderung zum Auslegen der Teilnehmereinrichtung (110) zum Melden von Signalempfangssleistungspegeln von Synchronisationssignalblöcken von Nachbarzellen der Basisstation (120) von der Standortverwaltungsfunktion (132); und
- Mittel zum Übertragen einer Auslegung, die die Teilnehmereinrichtung (110) zum Melden von Signalempfangssleistungspegeln von Synchronisationssignalblöcken von Nachbarzellen der Basisstation (120) auslegt, zur Teilnehmereinrichtung (110).

4. Basisstation (120) nach einem der Ansprüche 1 bis 3, wobei die Basisstation (120) ferner Folgendes umfasst:
- Mittel zum Empfangen einer Anforderung zum Auslegen der Teilnehmereinrichtung (110) zum Melden von mindestens einer Messung von mindestens einem anderen Downlinkreferenzsignal als dem Lokalisierungspagingsignal von der Standortverwaltungsfunktion (132);
- Mittel zum Übertragen einer Auslegung, die die Teilnehmereinrichtung (110) zum Melden der mindestens einen Messung von mindestens einem anderen Downlinkreferenzsignal auslegt, zur Teilnehmereinrichtung (110).

5. Basisstation (120) nach einem der Ansprüche 1 bis 4, wobei die Basisstation (120) ferner Folgendes umfasst:
- Mittel zum Empfangen einer Anforderung zum Auslegen der Teilnehmereinrichtung (110) zum Melden von Positionsbestimmungsmessergebnissen von mehreren Strahlen von der Standortverwaltungsfunktion (132); und
- Mittel zum Übertragen einer Auslegung, die die Teilnehmereinrichtung (110) zum Melden der Positionsbestimmungsmessergebnisse von mehreren Strahlen auslegt, zur Teilnehmereinrichtung (110).

6. Teilnehmereinrichtung (110), die Folgendes umfasst:
- Mittel zum Empfangen (510) eines Lokalisierungspagingsignals von einer Basisstation (120), wobei sich die Teilnehmereinrichtung (110) in einem Ruhe- oder Inaktivitätsmodus befindet, wenn das Lokalisierungspagingsignal empfangen wird;
- Mittel zum Bestimmen (520) auf Basis des Empfangens des Lokalisierungspagingsignals, dass mindestens Positionsbestimmungsmessergebnisse des Lokalisierungspagingsignals gemeldet werden müssen;
- Mittel zum Messen des Lokalisierungspagingsignals, um die Positionsbestimmungsmessergebnisse zu erhalten; und
- Mittel zum Übertragen (530) einer Berichtsnachricht der Teilnehmereinrichtung, die mindestens die Positionsbestimmungsmessergebnisse des Lokalisierungspagingsignals umfasst, zur Basisstation (120).

7. Teilnehmereinrichtung (110) nach Anspruch 6, wobei die Teilnehmereinrichtung (110) ferner Folgendes umfasst:
- Mittel zum Empfangen einer Auslegung, die die Teilnehmereinrichtung (110) zum Melden von Signalempfangssleistungspegeln von Synchronisationssignalblöcken von Nachbarzellen der Basisstation (120) auslegt, von der Basisstation (120);
- Mittel zum Übertragen der Signalempfangssleistungspegel von Synchronisationssignalblöcken von Nachbarzellen der Basisstation (120) zur Basisstation (120).

8. Teilnehmereinrichtung nach einem der Ansprüche 6 bis 7, wobei die Teilnehmereinrichtung ferner Folgendes umfasst:
- Mittel zum Empfangen einer Auslegung, die die Teilnehmereinrichtung zum Melden von mindestens einer Messung von mindestens einem anderen Downlinkreferenzsignal als dem Lokalisierungspagingsignal von der Basisstation;
- Mittel zum Übertragen des mindestens einen Messergebnisses des mindestens einen anderen Downlinkreferenzsignals zur Basisstation.

9. Teilnehmereinrichtung (110) nach einem der Ansprüche 6 bis 8, wobei die Teilnehmereinrichtung (110) ferner Folgendes umfasst:
- Mittel zum Empfangen einer Auslegung, die die Teilnehmereinrichtung (110) zum Melden von Positionsbestimmungsmessergebnissen von mehreren Strahlen auslegt, von der Basisstation (120);
- Mittel zum Übertragen der Positionsbestimmungsmessergebnisse der mehreren Strahlen zur Basisstation (120).

10. Teilnehmereinrichtung (110) nach einem der Ansprüche 6 bis 9, wobei die Positionsbestimmungsmessergebnisse des Lokalisierungspagingsignals mindestens eines von einer Ankunftszeit, einem Ankunftswinkel oder einem Träger-Interferenz-Verhältnis des Lokalisierungspagingsignals umfassen, gemessen von der Teilnehmereinrichtung (110).

11. Verfahren, das von einer Basisstation (120) durchgeführt wird, wobei das Verfahren Folgendes umfasst:
- Empfangen (410) einer Anforderung zum Übertragen eines Lokalisierungspagingsignals zu einer Teilnehmereinrichtung (110) von einer Standortverwaltungsfunktion (132), wobei das Lokalisierungspagingsignal dazu ausgelegt ist auszulösen, dass die Teilnehmereinrichtung (110) Positionsbestimmungsmessergebnisse des Lokalisierungspagingsignals meldet;
- Übertragen (420) des Lokalisierungspagingsignals zur Teilnehmereinrichtung (110), wobei sich die Teilnehmereinrichtung (110) in einem Ruhe- oder Inaktivitätsmodus befindet, wenn das Lokalisierungspagingsignals übertragen wird;
- Empfangen (430) einer Berichtsnachricht der Teilnehmereinrichtung (110) in Reaktion auf das Übertragen des Lokalisierungspagingsignals, wobei die Berichtsnachricht der Teilnehmereinrichtung die Positionsbestimmungsmessergebnisse umfasst;
- Empfangen einer Anforderung zum Durchführen von Positionsbestimmungsmessungen an einem Signal, das die Berichtsnachricht der Teilnehmereinrichtung enthält, von der Standortverwaltungsfunktion (132); und
- Durchführen der Positionsbestimmungsmessungen an dem Signal, das die Berichtsnachricht der Teilnehmereinrichtung enthält; und
- Übertragen (440) einer Berichtsnachricht der Basisstation an die Standortverwaltungsfunktion (132), wobei die Berichtsnachricht der Basisstation Informationen über einen Standort der Teilnehmereinrichtung (110) umfasst, wobei die Informationen mindestens eines von Folgendem umfassen: dem Standort der Teilnehmereinrichtung (110), der Berichtsnachricht der Teilnehmereinrichtung oder den Positionsbestimmungsmessungen, die am Signal durchgeführt werden, das die Berichtsnachricht der Teilnehmereinrichtung enthält.

12. Verfahren, das von einer Teilnehmereinrichtung (110) durchgeführt wird, wobei das Verfahren Folgendes umfasst:
- Empfangen (510) eines Lokalisierungspagingsignals von einer Basisstation (120), wobei sich die Teilnehmereinrichtung (110) in einem Ruhe- oder Inaktivitätsmodus befindet, wenn das Lokalisierungspagingsignal empfangen wird;
- Bestimmen (520) auf Basis des Empfangens des Lokalisierungspagingsignals, dass mindestens Positionsbestimmungsmessergebnisse des Lokalisierungspagingsignals gemeldet werden müssen;
- Messen des Lokalisierungspagingsignals, um die Positionsbestimmungsmessergebnisse zu erhalten; und
- Übertragen (530) einer Berichtsnachricht der Teilnehmereinrichtung, die mindestens die Positionsbestimmungsmessergebnisse des Lokalisierungspagingsignals umfassen, zur Basisstation (120).

## Revendications

1. Station de base (120) comprenant :
- des moyens pour recevoir (410) d'une fonction de gestion d'emplacement (132) une demande de transmission d'un signal de radiomessagerie de localisation à un équipement utilisateur (110), dans laquelle le signal de radiomessagerie de localisation est configuré pour déclencheur l'équipement utilisateur (110) afin qu'il rapporte les résultats de mesure de positionnement du signal de radiomessagerie de localisation ;
- des moyens pour transmettre (420) le signal de radiomessagerie de localisation à l'équipement utilisateur (110), dans laquelle l'équipement utilisateur (110) est en mode veille ou inactif lorsque le signal de radiomessagerie de localisation est transmis ;
- des moyens pour recevoir (430), en réponse à la transmission du signal de radiomessagerie de localisation, un message de rapport de l'équipement utilisateur (110), le message de rapport de l'équipement utilisateur comprenant lesdits résultats de mesure de positionnement ;
- des moyens pour recevoir de la fonction de gestion d'emplacement (132) une demande d'effectuer des mesures de positionnement sur un signal transportant le message de rapport de l'équipement utilisateur ; et
- des moyens pour effectuer lesdites mesures de positionnement sur le signal transportant le message de rapport de l'équipement utilisateur ; et
- des moyens pour transmettre (440) un message de rapport de la station de base à la fonction de gestion d'emplacement (132), le message de rapport de la station de base comprenant des informations sur l'emplacement de l'équipement utilisateur (110), les informations comprenant au moins l'un des éléments suivants : l'emplacement de l'équipement utilisateur (110), le message de rapport de l'équipement utilisateur, ou lesdites mesures de positionnement effectuée sur le signal transportant le message de rapport de l'équipement utilisateur.

2. Station de base (120) selon la revendication 1, dans laquelle la station de base (120) comprend en outre :
- des moyens pour recevoir de la fonction de gestion d'emplacement (132) une demande de configurer l'équipement utilisateur (110) afin qu'il rapporte les résultats de mesure de positionnement chaque fois que le signal de radiomessagerie de localisation est reçu ; et
- des moyens pour transmettre à l'équipement utilisateur (110) une configuration configurant l'équipement utilisateur (110) afin qu'il rapporte les résultats de mesure de positionnement chaque fois que le signal de radiomessagerie de localisation est reçu.

3. Station de base (120) selon l'une des revendications 1 et 2, dans laquelle la station de base (120) comprend en outre :
- des moyens pour recevoir de la fonction de gestion d'emplacement (132) une demande de configurer l'équipement utilisateur (110) afin qu'il rapporte des niveaux de puissance de signal reçus de blocs de signal de synchronisation de cellules voisines de la station de base (120) ; et
- des moyens pour transmettre à l'équipement utilisateur (110) une configuration configurant l'équipement utilisateur (110) afin qu'il rapporte des niveaux de puissance de signal reçus de blocs de signal de synchronisation de cellules voisines de la station de base (120).

4. Station de base (120) selon l'une des revendications 1 à 3, dans laquelle la station de base (120) comprend en outre :
- des moyens pour recevoir de la fonction de gestion d'emplacement (132) une demande de configurer l'équipement utilisateur (110) afin qu'il rapporte au moins une mesure d'au moins un autre signal de référence de liaison descendante que le signal de radiomessagerie de localisation ;
- des moyens pour transmettre à l'équipement utilisateur (110) une configuration configurant l'équipement utilisateur (110) afin qu'il rapporte l'au moins une mesure d'au moins un autre signal de référence de liaison descendante.

5. Station de base (120) selon l'une des revendications 1 à 4, dans laquelle la station de base (120) comprend en outre :
- des moyens pour recevoir de la fonction de gestion d'emplacement (132) une demande de configurer l'équipement utilisateur (110) afin qu'il rapporte les résultats de mesure de positionnement de multiples faisceaux ; et
- des moyens pour transmettre à l'équipement utilisateur (110) une configuration configurant l'équipement utilisateur (110) afin qu'il rapporte lesdits résultats de mesure de positionnement de multiples faisceaux.

6. Équipement utilisateur (110) comprenant :
- des moyens pour recevoir (510) d'une station de base (120) un signal de radiomessagerie de localisation,
dans lequel l'équipement utilisateur (110) est en mode veille ou inactif lorsque le signal de radiomessagerie de localisation est reçu ;
- des moyens pour déterminer (520), sur la base de la réception du signal de radiomessagerie de localisation, la nécessité de rapporter au moins des résultats de mesure de positionnement du signal de radiomessagerie de localisation ;
- des moyens pour mesurer le signal de radiomessagerie de localisation afin d'obtenir lesdits résultats de mesure de positionnement ; et
- des moyens pour transmettre (530) à la station de base (120) un message de rapport de l'équipement utilisateur comprenant au moins lesdits résultats de mesure de positionnement du signal de radiomessagerie de localisation.

7. Équipement utilisateur (110) selon la revendication 6, dans lequel l'équipement utilisateur (110) comprend en outre :
- des moyens pour recevoir de la station de base (120) une configuration configurant l'équipement utilisateur (110) afin qu'il rapporte des niveaux de puissance de signal reçus de blocs de signal de synchronisation de cellules voisines de la station de base (120) ;
- des moyens pour transmettre à la station de base (120) les niveaux de puissance de signal reçus de blocs de signal de synchronisation de cellules voisines de la station de base (120).

8. Équipement utilisateur selon l'une des revendications 6 et 7, dans lequel l'équipement utilisateur comprend en outre :
- des moyens pour recevoir de la station de base une configuration configurant l'équipement utilisateur afin qu'il rapporte au moins une mesure d'au moins un autre signal de référence de liaison descendante que le signal de radiomessagerie de localisation ;
- des moyens pour transmettre à la station de base l'au moins un résultat de mesure de l'au moins un autre signal de référence de liaison descendante.

9. Équipement utilisateur (110) selon l'une des revendications 6 à 8, dans lequel l'équipement utilisateur (110) comprend en outre :
- des moyens pour recevoir de la station de base (120) une configuration configurant l'équipement utilisateur (110) afin qu'il rapporte les résultats de mesure de positionnement de multiples faisceaux ;
- des moyens pour transmettre à la station de base (120) lesdits résultats de mesure de positionnement desdits multiples faisceaux.

10. Équipement utilisateur (110) selon l'une des revendications 6 à 9, dans lequel lesdits résultats de mesure de positionnement du signal de radiomessagerie de localisation comprennent au moins un parmi un temps d'arrivée, un angle d'arrivée ou un rapport porteuse/interférence du signal de radiomessagerie de localisation, mesuré par l'équipement utilisateur (110).

11. Procédé effectué par une station de base (120), le procédé comprenant :
- la réception (410), d'une fonction de gestion d'emplacement (132), d'une demande de transmission d'un signal de radiomessagerie de localisation à un équipement utilisateur (110), dans lequel le signal de radiomessagerie de localisation est configuré pour déclencheur l'équipement utilisateur (110) afin qu'il rapporte les résultats de mesure de positionnement du signal de radiomessagerie de localisation ;
- la transmission (420) du signal de radiomessagerie de localisation à l'équipement utilisateur (110), dans lequel l'équipement utilisateur (110) est en mode veille ou inactif lorsque le signal de radiomessagerie de localisation est transmis ;
- la réception (430), en réponse à la transmission du signal de radiomessagerie de localisation, d'un message de rapport de l'équipement utilisateur (110), le message de rapport de l'équipement utilisateur comprenant lesdits résultats de mesure de positionnement ;
- la réception, de la fonction de gestion d'emplacement (132), d'une demande d'effectuer des mesures de positionnement sur un signal transportant le message de rapport de l'équipement utilisateur ; et
- la réalisation desdites mesures de positionnement sur le signal transportant le message de rapport de l'équipement utilisateur ; et
- la transmission (440) d'un message de rapport de la station de base à la fonction de gestion d'emplacement (132), le message de rapport de la station de base comprenant des informations sur l'emplacement de l'équipement utilisateur (110), les informations comprenant au moins l'un des éléments suivants : l'emplacement de l'équipement utilisateur (110), le message de rapport de l'équipement utilisateur, ou lesdites mesures de positionnement effectuée sur le signal transportant le message de rapport de l'équipement utilisateur.

12. Procédé effectué par un équipement utilisateur (110), le procédé comprenant :
- la réception (510), d'une station de base (120), d'un signal de radiomessagerie de localisation, dans lequel l'équipement utilisateur (110) est en mode veille ou inactif lorsque le signal de radiomessagerie de localisation est reçu ;
- la détermination (520), sur la base de la réception du signal de radiomessagerie de localisation, de la nécessité de rapporter au moins des résultats de mesure de positionnement du signal de radiomessagerie de localisation ;
- la mesure du signal de radiomessagerie de localisation afin d'obtenir lesdits résultats de mesure de positionnement ; et
- la transmission (530) à la station de base (120) d'un message de rapport de l'équipement utilisateur comprenant au moins lesdits résultats de mesure de positionnement du signal de radiomessagerie de localisation.
